# EUROPEAN PATENT APPLICATION

(11) **EP 4 699 919 A1**
(43) Date of publication of application: **25.02.2026**
(21) Application number: 24811077.7
(22) Date of filing: 20.05.2024
(51) Int. Cl.: B63B 39/06

(54) **FIN STABILIZER, SHIP, AND METHOD FOR ASSEMBLING FIN STABILIZER**

(30) Priority: 25.05.2023 JP 2023086332
(71) Applicant: Mitsubishi Heavy Industries Marine Machinery & Equipment Co., Ltd., Nagasaki-shi Nagasaki 850-8610 (JP)
(72) Inventor: HOSONO, Kazuki, Tokyo 100-8332 (JP); YAMADA, Takuyoshi, Tokyo 100-8332 (JP); KATO, Kenichi, Nagasaki-shi, Nagasaki 850-8610 (JP); SUZUKI, Takashi, Nagasaki-shi, Nagasaki 850-8610 (JP)
(74) Representative: Hoffmann Eitle
(86) International application number: PCT/JP2024/018436
(87) International publication number: WO 2024/242070

(57) **Abstract**

The present invention is a fin stabilizer for suppressing rolling of a ship, the fin stabilizer comprising: a fin that is configured to be turnable around a rotation axis; a fin box that forms an internal space in which the fin is housed, the fin box including an opening for allowing the fin to go in and out of the internal space and a stern-side wall surface that is a wall surface on the stern side of the fin box; a groove part forming part that forms a groove part that is recessed with respect to the hull of the ship on the stern side of the fin box and connects the outer plate of the hull and the stern-side wall surface; and a closing part that partitions the internal space of the fin box and an external space of the hull on the stern side of the turning area of the fin.

## Description

### Technical Field

The present disclosure relates to a fin stabilizer, a ship including a fin stabilizer, and a method for assembling a fin stabilizer.

The present application claims the right of priority based on Japanese Patent Application No. 2023-086332 filed with the Japan Patent Office on May 25, 2023, the content of which is incorporated herein by reference.

### Background Art

A fin stabilizer for suppressing a roll motion of a ship may be provided in the ship. As the fin stabilizer, there is a retractable type fin stabilizer in which fin can turn about its rotation axis and accommodated inside a fin box provided in a side-shell plate of a hull (see PTL 1). It is known that in a retractable type fin stabilizer, external water (fluid) flows into the interior of the fin box through an opening for allowing the fin to enter and exit, and the external water flowing into the interior of the fin box serves as resistance.

### Citation List

### Patent Literature

[PTL 1] PCT Japanese Translation Patent Publication No. 2017-531595

### Summary of Invention

### Technical Problem

In the fin stabilizer disclosed in PTL 1, a groove portion is provided at a rear end of the fin box, and the flow of the external water flowing into the interior of the fin box through the groove portion is guided to the outside of the hull. Further reduction of the resistance caused by the external water flowing into the interior of the fin box is required for the fin stabilizer.

In view of the above circumstances, an object of at least one embodiment of the present disclosure is to provide a fin stabilizer that can reduce resistance caused by a fluid flowing into an interior of a fin box accommodating a fin, a ship including the fin stabilizer, and a method for assembling the fin stabilizer.

### Solution to Problem

At least one embodiment of the present disclosure relates to a fin stabilizer for suppressing a roll motion of a ship, the fin stabilizer including: a fin that is configured to be turnable around a rotation axis; a fin box that forms an internal space in which the fin is accommodated and that has an opening for the fin to enter and exit the internal space and a stern-side wall surface that is a wall surface on a stern side of the fin box; a groove portion forming portion that forms a groove portion formed to be recessed with respect to a hull of the ship on the stern side with respect to the fin box and connecting a side-shell plate of the hull and the stern-side wall surface; and a closing portion that partitions the internal space of the fin box and an external space of the hull from each other on the stern side with respect to a turning region of the fin.

At least one embodiment of the present disclosure relates to a ship including: the fin stabilizer; and the hull on which the fin stabilizer is mounted.

At least one embodiment of the present disclosure relates to a method for assembling the fin stabilizer, the method including: a groove portion forming portion preparation step of preparing the groove portion forming portion that is a separate body from the hull; a groove portion mounting hole forming step of forming a groove portion mounting hole for mounting the groove portion forming portion, on the stern side with respect to the closing portion of the hull; a groove portion forming portion fixing step of inserting the groove portion forming portion into the groove portion mounting hole and joining the groove portion forming portion to the hull and the fin box by welding or other methods, to fix the groove portion forming portion to the hull and the fin box; and a communication hole forming step of forming a communication hole for allowing a groove interior space formed inside the groove portion to communicate with the internal space of the fin box, on the stern-side wall surface.

### Advantageous Effects of Invention

According to at least one embodiment of the present disclosure, there is provided the fin stabilizer that can suppress the resistance caused by the fluid flowing into the interior of the fin box accommodating the fin, the ship including the fin stabilizer, and the method for assembling the fin stabilizer.

### Brief Description of Drawings

FIG. 1 is a schematic plan view showing a ship including a fin stabilizer according to an embodiment of the present disclosure when viewed from above.
FIG. 2 is a schematic view showing the ship shown in FIG. 1 when viewed from the rear.
FIG. 3 is a schematic perspective view showing a vicinity of the fin stabilizer of the ship according to the embodiment of the present disclosure.
FIG. 4 is a schematic sectional view schematically showing a cross section, which is orthogonal to a height direction, of the vicinity of the fin stabilizer of the ship according to the embodiment of the present disclosure.
FIG. 5 is a schematic sectional view schematically showing the cross section, which is orthogonal to the height direction, of the vicinity of the fin stabilizer of the ship according to the embodiment of the present disclosure.
FIG. 6 is a schematic sectional view schematically showing a cross section, which is orthogonal to a height direction, of a vicinity of a fin stabilizer of a ship according to a comparative example.
FIG. 7 is a schematic perspective view showing the vicinity of the fin stabilizer of the ship according to the embodiment of the present disclosure.
FIG. 8 is a schematic sectional view schematically showing the cross section, which is orthogonal to the height direction, of the vicinity of the fin stabilizer of the ship according to the embodiment of the present disclosure.
FIG. 9 is a diagram showing a method for assembling the fin stabilizer according to the embodiment of the present disclosure.
FIG. 10 is a schematic perspective view showing a groove portion forming portion according to the embodiment of the present disclosure.
FIG. 11 is a diagram showing the method for assembling the fin stabilizer according to the embodiment of the present disclosure.
FIG. 12 is a schematic view showing the vicinity of the fin stabilizer of the ship according to the embodiment of the present disclosure when viewed from an outer side of a hull.
FIG. 13 is a schematic sectional view schematically showing the cross section, which is orthogonal to the height direction, of the vicinity of the fin stabilizer of the ship according to the embodiment of the present disclosure.
FIG. 14 is a schematic sectional view schematically showing the cross section, which is orthogonal to the height direction, of the vicinity of the fin stabilizer of the ship according to the embodiment of the present disclosure.
FIG. 15 is a schematic sectional view schematically showing the cross section, which is orthogonal to the height direction, of the vicinity of the fin stabilizer of the ship according to the embodiment of the present disclosure.
FIG. 16 is a schematic sectional view schematically showing a cross section, which is orthogonal to a bow-stern direction, of the vicinity of the fin stabilizer of the ship according to the embodiment of the present disclosure.

### Description of Embodiments

Hereinafter, some embodiments of the present disclosure will be described with reference to the accompanying drawings. Dimensions, materials, shapes, relative dispositions, and the like of components described as embodiments or shown in the drawings are not intended to limit the scope of the present disclosure, but are merely explanatory examples. The expression "extending in a certain direction" is not limited to extending in a certain direction, and also includes extending in a direction of being inclined relative to a certain direction within a predetermined angle (for example, ±10°).

### (Ship)

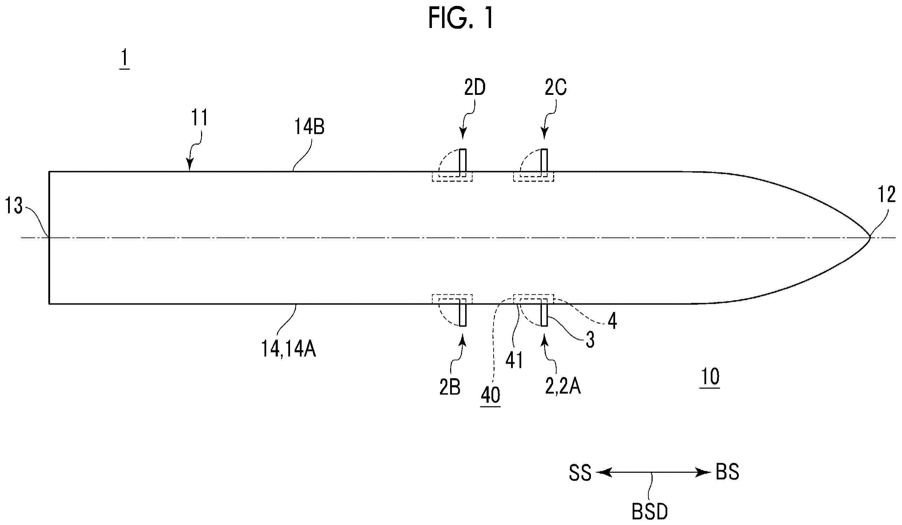

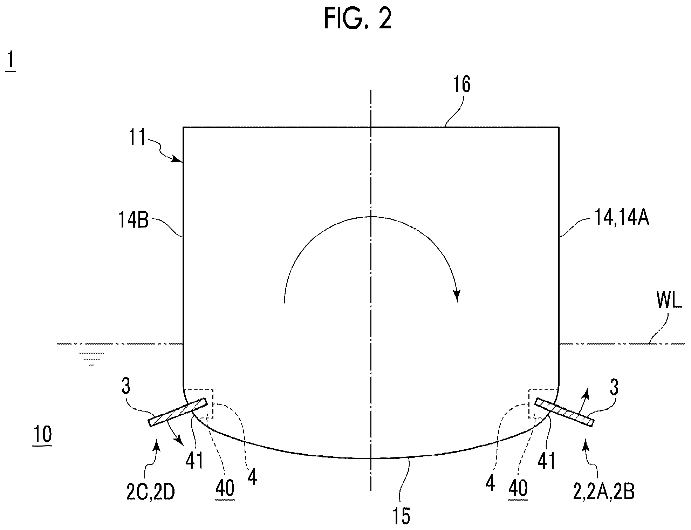

FIG. 1 is a schematic plan view showing a ship 1 including a fin stabilizer 2 according to an embodiment of the present disclosure when viewed from above. FIG. 2 is a schematic view showing the ship 1 shown in FIG. 1 when viewed from the rear. As shown in FIGS. 1 and 2, the ship 1 includes the fin stabilizer 2 for suppressing a roll motion of the ship 1, and a hull 11 on which the fin stabilizer 2 is mounted. Hereinafter, as shown in FIG. 1, a front-rear direction (a left-right direction in FIG. 1) of the hull 11 is defined as a bow-stern direction BSD. In the bow-stern direction BSD, a front side (right side in FIG. 1) of the hull 11 provided with a bow 12 is defined as a bow side BS, and a rear side (left side in FIG. 1) of the hull 11 provided with a stern 13 is defined as a stern side SS.

As shown in FIG. 2, the hull 11 has a hull shell including a pair of side-shell plates 14, a bottom plate 15, and an upper deck 16. The pair of side-shell plates 14 includes a starboard-side shell plate 14A provided on a starboard side of the hull 11, and a port-side shell plate 14B provided on a port side of the hull 11. One end of the bottom plate 15 is connected to a lower end of the starboard-side shell plate 14A, and the other end is connected to a lower end of the port-side shell plate 14B. One end of the upper deck 16 is connected to an upper end of the starboard-side shell plate 14A, and the other end of the upper deck 16 is connected to an upper end of the port-side shell plate 14B. In the embodiment shown in FIG. 2, the pair of side-shell plates 14 and the bottom plate 15 have an outer contour shape that is U-shaped in a cross section orthogonal to a bow-stern direction BSD.

The hull 11 may have a configuration of a hull of a general ship. The hull 11 may include, for example, a main engine (not shown) disposed inside the hull 11 and a propulsion device (not shown), such as a propeller, that converts rotational energy of the main engine into a propulsive force of the hull 11. In addition, the hull 11 may include a superstructure (not shown) or a funnel (not shown) that is formed above the upper deck 16.

As shown in FIGS. 1 and 2, the ship 1 may include a plurality of fin stabilizers 2 (2A to 2D). As shown in FIG. 2, each of the plurality of fin stabilizers 2 is provided below a waterline WL of the ship 1, specifically, near the bottom plate 15 in the side-shell plate 14. Each of the plurality of fin stabilizers 2 can cause lift generated by a fin 3 protruding to the outside of the hull 11 to act on the hull 11 to cancel out the roll motion of the hull 11 in a roll direction while the ship 1 is sailing.

In the embodiment shown in FIG. 1, the plurality of fin stabilizers 2 (2A to 2D) include two fin stabilizers 2A and 2B provided on the starboard-side shell plate 14A and two fin stabilizers 2C and 2D provided on the port-side shell plate 14B. The fin stabilizer 2C is disposed at a position that at least partially overlaps the fin stabilizer 2A in the bow-stern direction BSD. The fin stabilizer 2D is disposed at a position that at least partially overlaps the fin stabilizer 2B provided on the stern side SS with respect to the fin stabilizer 2C and provided on the stern side SS with respect to the fin stabilizer 2A in the bow-stern direction BSD. The number or the positions of the fin stabilizers 2 mounted on the hull 11 are not limited to the shown embodiment. For example, a configuration may be adopted in which one fin stabilizer 2 is provided on each of the starboard-side shell plate 14A and the port-side shell plate 14B of the hull 11, and the present disclosure is suitably applicable to such a configuration.

### (Fin Stabilizer)

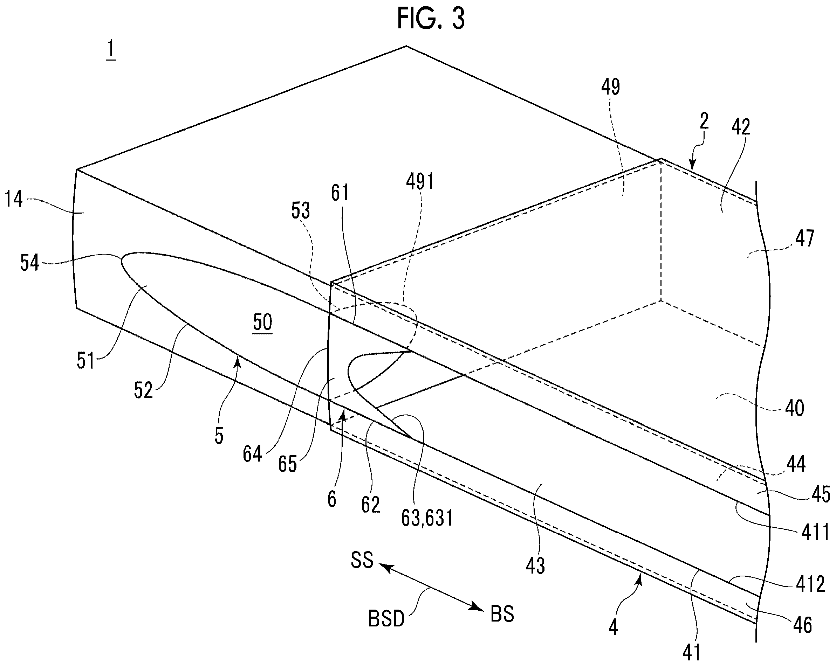

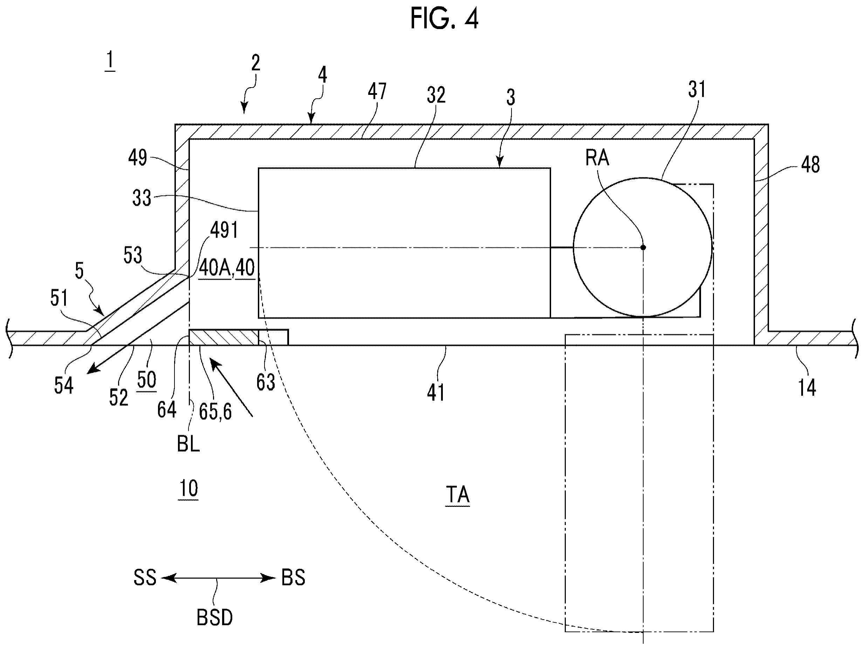

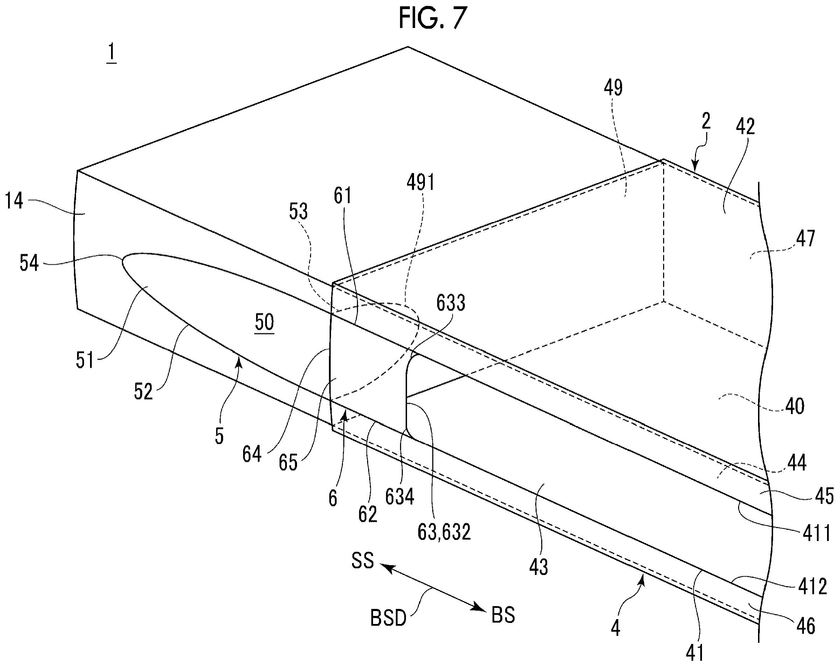

FIGS. 3 and 7 are each schematic perspective views showing the vicinity of the fin stabilizer 2 of the ship 1 according to the embodiment of the present disclosure. FIGS. 4, 5, and 8 are each schematic sectional views schematically showing a cross section, which is orthogonal to a height direction, of the vicinity of the fin stabilizer 2 of the ship 1 according to the embodiment of the present disclosure. As shown in FIGS. 3 to 5, 7, and 8, the fin stabilizer 2 according to some embodiments includes the fin 3, a fin box 4 that forms an internal space 40 in which the fin 3 is accommodated, a groove portion forming portion 5 that forms a groove portion 51 formed to be recessed with respect to the hull 11 of the ship 1 on the stern side SS with respect to the fin box 4, and a closing portion 6.

### (Fin)

The fin 3 is configured to be turnable around a rotation axis RA of the fin 3. The fin 3 includes an accommodation drive portion 31 that is supported by the hull 11 to be rotatable around the rotation axis RA, and a blade portion 32 that is supported by the accommodation drive portion 31. The fin 3 can turn the blade portion 32 around the rotation axis RA by rotating the accommodation drive portion 31 around the rotation axis RA. The fin 3 may be configured to be capable of changing a blade angle of the blade portion 32.

The fin 3 is capable of turning the blade portion 32 around the rotation axis RA to displace the blade portion 32 between an accommodation position (see solid lines in FIGS. 4, 5, and 8) at which all of the blade portions 32 are accommodated in the internal space 40 of the fin box 4 and a protrusion position (see two-dot chain lines in FIGS. 4, 5, and 8, and refer to FIGS. 1 and 2) at which at least some of the blade portions 32 protrude to the outside of the hull 11 to prevent the roll motion of the hull 11. An operating region of the fin 3 when the blade portion 32 is displaced between the accommodation position and the protrusion position is defined as a turning region TA of the fin 3. In addition, a space on the stern side SS with respect to the blade portion 32 at the accommodation position in the internal space 40 is defined as a stern-side space 40A.

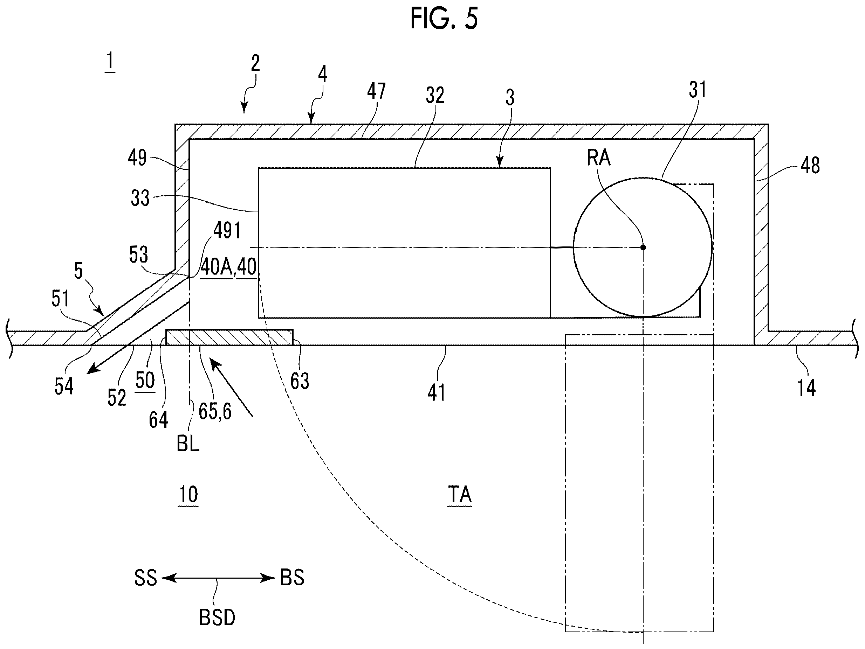

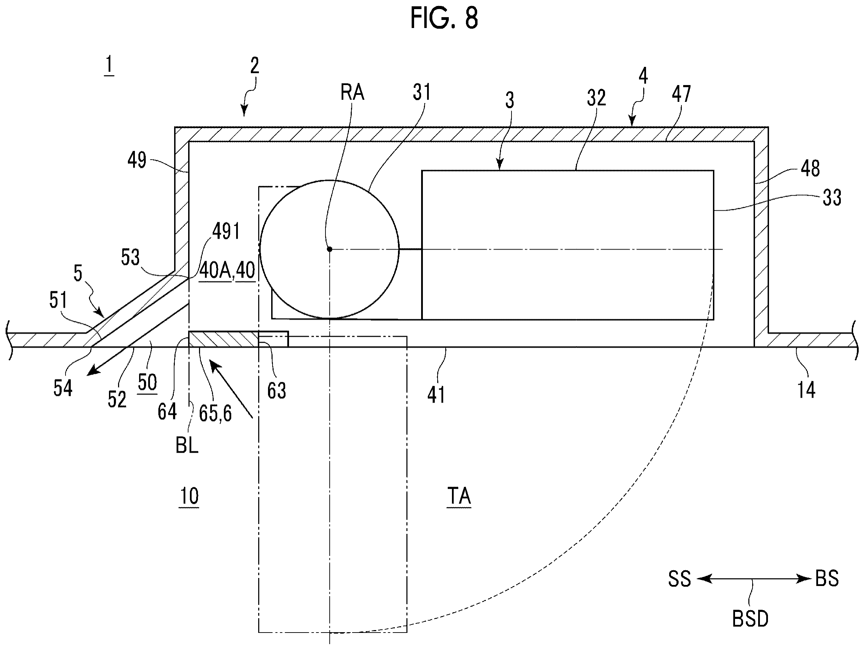

In the shown embodiment, as shown in FIGS. 4, 5, and 8, the blade portion 32 at the accommodation position is configured such that a front edge and a rear edge of the blade portion 32 extend in the bow-stern direction BSD. In the embodiment shown in FIGS. 4 and 5, the blade portion 32 at the accommodation position is configured such that the rear edge of the blade portion 32 is located on an inner side (side away from an opening 41) of the fin box 4 with respect to the front edge of the blade portion 32. In the embodiment shown in FIG. 8, the blade portion 32 at the accommodation position is configured such that the front edge of the blade portion 32 is located on the inner side of the fin box 4 with respect to the rear edge of the blade portion 32.

In the shown embodiment, as shown in FIGS. 4, 5, and 8, the blade portion 32 at the protrusion position has a configuration in which the front edge and the rear edge of the blade portion 32 extend in a direction intersecting (in the shown example, orthogonal to) the bow-stern direction BSD, the front edge of the blade portion 32 is located on the bow side BS, and the rear edge of the blade portion 32 is located on the stern side SS. The blade portion 32 at the protrusion position may extend obliquely downward from the hull 11 when viewed from one side in the bow-stern direction BSD (see FIG. 2). The shape of the blade portion 32 is not limited to the shown embodiment and can be changed as appropriate within the scope of application of the present disclosure.

### (Fin Box)

As shown in FIGS. 3 and 7, the fin box 4 is formed with the opening 41 for the fin 3 to enter and exit the internal space 40. The opening 41 of the fin box 4 allows the internal space 40 and the external space 10 of the hull 11 to communicate with each other and allows the blade portion 32 of the fin 3 to be inserted.

As shown in FIG. 3, the fin box 4 has a ceiling surface 42 that is a wall surface on an upper side of the fin box 4, a bottom surface 43 that is a wall surface on a lower side of the fin box 4, an opening-side wall surface 44 that is a wall surface on the opening side of the fin box 4 in which the opening 41 is formed, an inner-side wall surface 47 that is a wall surface on the inner side that is a side separated from the opening 41 of the fin box 4, and a stern-side wall surface 49 that is a wall surface on the stern side SS of the fin box 4. As shown in FIG. 4, the fin box 4 further includes a bow-side wall surface 48 that is a wall surface on the bow side BS. The internal space 40 of the fin box 4 is defined by the ceiling surface 42, the bottom surface 43, the opening-side wall surface 44, the inner-side wall surface 47, the bow-side wall surface 48, and the stern-side wall surface 49. In the shown embodiment, the internal space 40 is a rectangular parallelepiped-shaped space of which a longitudinal direction extends in the bow-stern direction BSD.

### (Groove Portion and Groove Portion Forming Portion)

The groove portion 51 is formed to be recessed with respect to the side-shell plate 14 of the hull 11 on the stern side SS with respect to the fin box 4. The groove portion 51 connects the stern-side wall surface 49 and the side-shell plate 14 on the stern side SS with respect to the stern-side wall surface 49. The groove portion forming portion 5 has an end portion 53 on the bow side of connected to a stern side wall having the stern-side wall surface 49 of the fin box 4, and has a portion other than the end portion 53 on the bow side such as an end portion 54 on the stern side connected to the side-shell plate 14 of the hull 11. When a depth of the internal space 40 (stern-side space 40A) facing the stern-side wall surface 49 is 100%, a depth of the groove portion 51 at the connection position with the stern-side wall surface 49 is 50% or less, and is preferably 30% or less.

The groove portion 51 has a groove portion side opening 52 that allows a groove interior space 50 formed inside the groove portion 51 and an external space 10 of the hull 11 to communicate with each other. A communication hole 491 through which the groove interior space 50 formed inside the groove portion 51 and the internal space 40 (stern-side space 40A) communicate with each other is formed at an opening-side wall surface 44 side end of the stern-side wall surface 49. By providing the groove portion 51, the external water can be guided from the internal space 40 to the groove interior space 50 through the communication hole 491, and the external water can be guided from the groove interior space 50 to the external space 10 through the groove portion side opening 52.

While the ship 1 is sailing, the external water (fluid) such as seawater flows from the external space 10 of the hull 11 into the internal space 40 of the fin box 4 through the opening 41. The external water varies depending on a water area in which the ship 1 sails, and is not limited to seawater, and may be river water or lake water. The flow of the external water flowing into the internal space 40 hits the stern-side wall surface 49 to increase the pressure, so that the resistance caused by the external water flowing into the internal space 40 increases, which may cause a decrease in the efficiency of the ship 1. By providing the groove portion 51, the flow of the external water flowing into the internal space 40 is guided to the groove interior space 50, so that the pressure rise in the external water in the vicinity of the stern-side wall surface 49 can be suppressed, and the resistance caused by the external water can be reduced.

### (Fin Stabilizer According to Comparative Example)

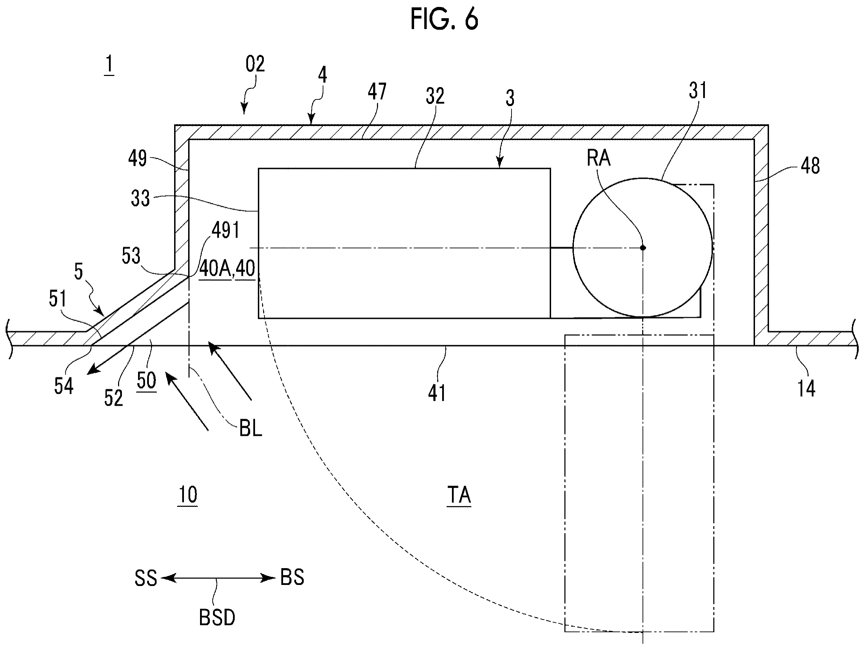

FIG. 6 is a schematic sectional view schematically showing a cross section, which is orthogonal to the height direction, of a vicinity of a fin stabilizer 02 of a ship 1 according to a comparative example. As shown in FIG. 6, the fin stabilizer 02 includes the fin 3, the fin box 4, and the groove portion forming portion 5 that forms the groove portion 51. That is, the fin stabilizer 02 has the same configuration as the fin stabilizer 2 except for not including the closing portion 6.

As shown in FIG. 6, the fin stabilizer 02 is provided with the groove portion 51, as compared with a case where the groove portion 51 is not provided, so that an opening area (the sum of an area of the opening 41 and an area of the groove portion side opening 52) increases, and an amount of the external water flowing from the external space 10 into the groove interior space 50 or into the stern-side space 40A adjacent to the groove interior space 50 increases. Due to the increase in the inflow of the external water, there is a concern that the effect of suppressing the pressure rise in the external water in the vicinity of the stern-side wall surface 49 or the effect of reducing the resistance is impaired.

### (Closing Portion)

As shown in FIGS. 4, 5, and 8, the closing portion 6 is provided to partition the internal space 40 of the fin box 4 and the external space 10 of the hull 11 on the stern side SS with respect to the turning region TA of the fin 3. The closing portion 6 is provided on the bow side BS with respect to the groove portion side opening 52. As shown in FIGS. 3 and 7, the closing portion 6 extends from an upper edge 411 to a lower edge 412 of the opening 41 of the fin box 4.

The closing portion 6 may be a metal plate formed separately from the fin box 4 when the fin box 4 is formed. In this case, an upper end 61 of the closing portion 6 is connected to the upper edge 411 of the opening 41 by welding or other methods, and a lower end 62 of the closing portion 6 is connected to the lower edge 412 of the opening 41 by welding or other methods, so that the closing portion 6 is fixed to the fin box 4. In addition, the closing portion 6 may be integrally formed with the fin box 4 when the fin box 4 is formed. The closing portion 6 may be made of a material other than a metallic material (for example, a fiber reinforced plastic), and may be connected to the upper edge 411 and the lower edge 412 of the opening 41 by a method other than welding, such as adhesion via an adhesive agent.

The fin box 4 has an upper-side opening wall 45 extending upward from the upper edge 411 of the opening 41 and a lower-side opening wall 46 extending downward from the lower edge 412 of the opening 41. The opening-side wall surface 44 is formed on the upper-side opening wall 45 and the lower-side opening wall 46. An outer surface 65 of the closing portion 6 facing the external space 10 is continuous with outer surfaces of the upper-side opening wall 45 and the lower-side opening wall 46 facing the external space 10 on a side opposite to the opening-side wall surface 44, without a step. The step referred to in this paragraph does not include a minute step caused by a manufacturing error and the like.

According to the configuration described above, the closing portion 6 partitions the internal space 40 of the fin box 4 and the outside of the hull 11 from each other, and thus, while the ship 1 is sailing, the inflow of the external water from the external space 10 of the hull 11 into the internal space 40 (stern-side space 40A) or into the inside of the groove portion 51 in which the groove interior space 50 is formed can be suppressed. Accordingly, the effect of suppressing the pressure rise in the external water in the vicinity of the stern-side wall surface 49 and the effect of reducing the resistance due to the provision of the groove portion 51 can be effectively exhibited, and the efficiency of the ship 1 including the fin stabilizer 2 can be improved. The closing portion 6 can exhibit the effects described above even in a case where the blade portion 32 is located at any of the accommodation position or the protrusion position.

### (Edge on Bow Side of Closing Portion)

In some embodiments, as shown in FIG. 3, an edge 63 on the bow side of the closing portion 6 includes a concave curved portion 631 that is recessed toward the stern side. The edge 63 on the bow side has a concave curved shape in which the concave curved portion 631 is formed from the upper end to the lower end. The concave curved portion 631 may be formed by, for example, a single arc having a predetermined curvature as shown in FIG. 3, or may be formed by a combination of a plurality of (two or more) arcs. The arc forming the concave curved portion 631 may have a shape obtained by cutting a part of a circle or an ellipse.

According to the configuration described above, it is preferable that the gap between the edge 63 on the bow side and the turning region TA of the fin 3 is small in order to minimize the opening area of the opening 41 of the fin box 4. The edge 63 on the bow side is formed into the concave curved shape corresponding to the convex curved shape such as a front edge or a rear edge of the fin 3, so that the effect of suppressing the inflow of the external water can be effectively exhibited by the closing portion 6.

In some embodiments, as shown in FIG. 7, the edge 63 on the bow side of the closing portion 6 includes a height direction extending portion 632 that extends in a height direction (in the drawing, an up-down direction) of the hull 11, an upwardly curved portion 633 that is curved toward the bow side as going upward from an upper end of the height direction extending portion 632, and a downwardly curved portion 634 that is curved toward the bow side as going downward from a lower end of the height direction extending portion 632.

In the shown embodiment, in a case where, in the height direction of the hull 11, a position of the lower end of the edge 63 on the bow side is defined as a 0% position and a position of the upper end of the edge 63 on the bow side is defined as a 100% position, the lower end of the height direction extending portion 632 is located in a range of 0% to 20%, and the upper end of the height direction extending portion 632 is located in a range of 80% to 100%.

According to the configuration described above, by providing the height direction extending portion 632 at the center of the edge 63 on the bow side, the manufacturability of the closing portion 6 can be improved as compared with a case where the edge 63 on the bow side has a concave curved shape.

### (Edge on Stern Side of Closing Portion)

In some embodiments, as shown in FIGS. 3 and 7, an edge 64 on the stern side of the closing portion 6 includes a height direction extending portion that extends in the height direction of the hull 11. By providing the height direction extending portion at the edge 64 on the stern side, the closing portion 6 can be manufactured with good manufacturability.

In FIGS. 4 and 5, a boundary between the internal space 40 of the fin box 4 and the groove interior space 50 is indicated by a boundary line BL. The boundary line BL is provided on a plane extending from the stern-side wall surface 49 that extends in a direction orthogonal to the bow-stern direction BSD.

The edge 64 on the stern side of the closing portion 6 may be provided at the same position as the stern-side wall surface 49 and the boundary line BL (see FIG. 4) in the bow-stern direction BSD, or may be provided on the bow side with respect to the stern-side wall surface 49 and the boundary line BL. In addition, as shown in FIG. 5, the edge 64 on the stern side of the closing portion 6 may be provided on the stern side with respect to the stern-side wall surface 49 and the boundary line BL in the bow-stern direction BSD. In other words, the closing portion 6 may include a groove portion side closing portion that extends from the upper edge to the lower edge of the groove portion side opening 52 on the bow side with respect to the groove portion side opening 52 and that partitions the groove interior space 50 and the external space 10 from each other.

### (Shape of Groove Portion)

In some embodiments, the groove portion 51 is configured such that each of a maximum depth and an opening height decreases toward the stern side as shown in FIGS. 3 to 8. The opening height of the groove portion 51 is a length from the upper edge to the lower edge of the groove portion 51 in the height direction of the hull 11. In the shown embodiment, each of the maximum depth and the opening height of the groove portion 51 continuously decrease from the end on the bow side to the end on the stern side, but each of the maximum depth and the opening height may intermittently decrease. That is, the groove portion 51 may have a portion in which the maximum depth and the opening height are constant.

According to the configuration described above, the external water flowing into the groove interior space 50 can be guided to flow toward the groove portion side opening 52 side in the depth direction of the groove portion 51 due to the inner surface shape of the groove portion 51, so that the discharge of the external water from the groove interior space 50 to the external space 10 is facilitated.

In some embodiments, the contour shape of the groove portion 51 in the cross section orthogonal to the bow-stern direction is formed in a concave curved shape as shown in FIGS. 3 and 7. The contour shape of the concave curved shape of the inner surface of the groove portion 51 may be formed by a single circular arc having a predetermined curvature, or may be formed by a combination of a plurality of (two or more) circular arcs. The arc forming the concave curved portion 631 may have a shape obtained by cutting a part of a circle or an ellipse. The inner surface of the groove portion 51 is formed in the concave curved shape, so that it is possible to suppress the pressure rise in the external water flowing into the groove interior space 50, and to reduce resistance caused by the external water. In another embodiment, the contour shape of the groove portion 51 in the cross section orthogonal to the bow-stern direction may be formed in a shape other than the concave curved shape, such as a U shape.

In some embodiments, as shown in FIGS. 4 and 5, the fin 3 is configured such that a fin tip portion 33, which is an end portion on a side separated from the rotation axis RA when the fin 3 is accommodated in the internal space 40 of the fin box 4, is located on the stern side with respect to the rotation axis RA. Even in a case where the so-called fin 3 is accommodated rearward in the fin box 4, the effect of suppressing the pressure rise in the external water in the vicinity of the stern-side wall surface 49 and the effect of reducing the resistance can be effectively exhibited by the closing portion 6.

In some embodiments, as shown in FIG. 8, the fin 3 is configured such that the fin tip portion 33, which is an end portion on a side separated from the rotation axis RA when the fin 3 is accommodated in the internal space 40 of the fin box 4, is located on the bow side with respect to the rotation axis RA. Even in a case where the so-called fin 3 is accommodated forward in the fin box 4, the effect of suppressing the pressure rise in the external water in the vicinity of the stern-side wall surface 49 and the effect of reducing the resistance can be effectively exhibited by the closing portion 6.

### (Method for Assembling Fin Stabilizer)

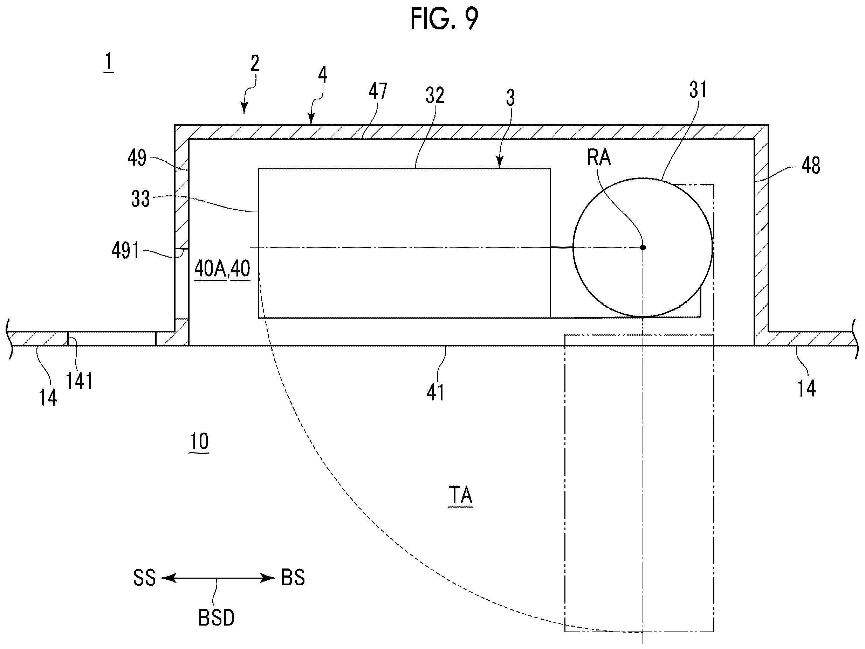

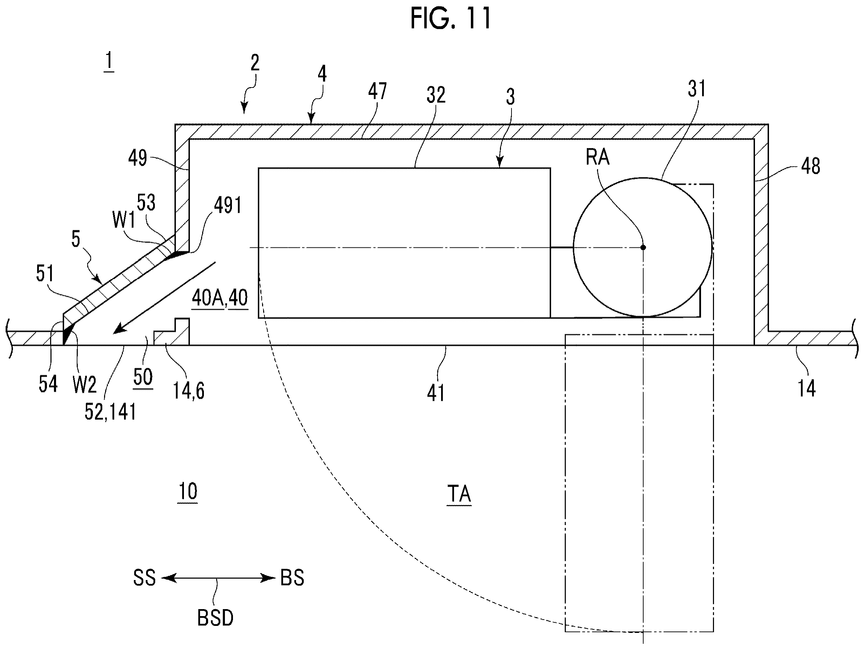

Hereinafter, a method for assembling the fin stabilizer 2 will be described with reference to FIGS. 9 to 11. The method for assembling the fin stabilizer 2 can also be applied to the fin stabilizer 2 described later. FIGS. 9 and 11 are diagrams showing the method for assembling the fin stabilizer 2 according to the embodiment of the present disclosure. In FIG. 9, the cross section, which is orthogonal to the height direction of the hull 11, of the fin box 4 fixed to the side-shell plate 14 of the hull 11 is schematically shown. In FIG. 11, the cross sections of the fin box 4 shown in FIG. 9 and the groove portion forming portion 5 fixed to the fin box 4 and the side-shell plate 14 are schematically shown, the cross sections being orthogonal to the height direction of the hull 11.

In the method for assembling the fin stabilizer 2, the fin box 4 is fixed to the side-shell plate 14 of the hull 11. In a case where the fin box 4 is a separate body from the side-shell plate 14, the fin box 4 is fixed to the side-shell plate 14 by welding or other methods.

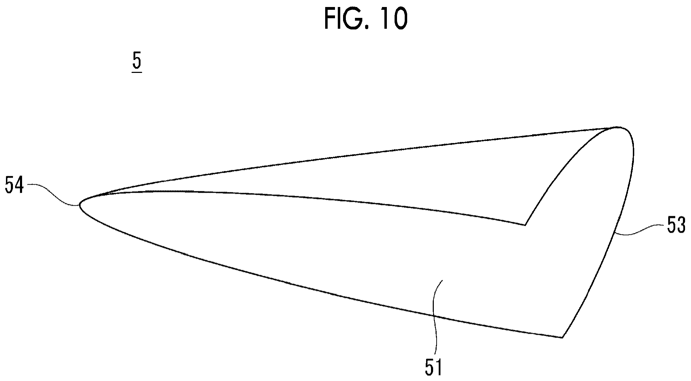

The method for assembling the fin stabilizer 2 includes a groove portion forming portion preparation step of preparing the groove portion forming portion 5 that is a separate body from the hull 11 and the fin box 4. FIG. 10 is a schematic perspective view showing the groove portion forming portion 5 according to the embodiment of the present disclosure. In the shown embodiment, the groove portion forming portion 5 is made of a metal plate curved in a semicircular shape having the groove portion 51. The groove portion forming portion 5 may be formed of a material other than a metallic material (for example, a fiber reinforced plastic), and may be fixed to the side-shell plate 14 by a method other than welding, such as adhesion via an adhesive agent.

The method for assembling the fin stabilizer 2 further includes a groove portion mounting hole forming step of forming a groove portion mounting hole 141 (see FIG. 9) for mounting the groove portion forming portion 5 on the side-shell plate 14 of the hull 11 on the stern side with respect to the closing portion 6 or the stern-side wall surface 49. The groove portion mounting hole 141 is a through-hole that penetrates the side-shell plate 14, and is large enough to allow the groove portion forming portion 5 to be inserted.

The method for assembling the fin stabilizer 2 further includes a groove portion forming portion fixing step of inserting the groove portion forming portion 5 into the groove portion mounting hole 141 and joining the groove portion forming portion 5 to the side-shell plate 14 and the fin box 4 of the hull 11 by welding or other methods, to fix the groove portion forming portion 5 to the side-shell plate 14 and the fin box 4 of the hull 11. Reference numeral W1 in FIG. 11 indicates a welded portion that joins the fin box 4 and the groove portion forming portion 5, and reference numeral W2 in FIG. 11 indicates a welded portion that joins the fin box 4 and the side-shell plate 14. The fin stabilizer 2 assembled by using the assembly method includes the welded portion W1 and the welded portion W2 as shown in FIG. 11.

The method for assembling the fin stabilizer 2 further includes a communication hole forming step of forming the communication hole 491 for allowing the groove interior space 50 formed inside the groove portion 51 and the internal space 40 of the fin box 4 to communicate with each other on the stern-side wall surface 49. The communication hole 491 may be formed before the groove portion forming portion fixing step, or may be formed after the groove portion forming portion fixing step.

According to the method for assembling the fin stabilizer 2, the groove portion 51 can be newly provided in the fin stabilizer 2 that does not include the groove portion 51. In addition, when the groove portion 51 is newly provided, the existing side-shell plate 14 of the hull 11 can be used as the closing portion 6, so that the fin stabilizer 2 can be remodeled to include the groove portion 51 and the closing portion 6 without newly providing the closing portion 6. In addition, not only the side-shell plate 14 but also the stern side wall portion having the stern-side wall surface 49 of the fin box 4 can be used as the closing portion 6.

### (Rectification Plate)

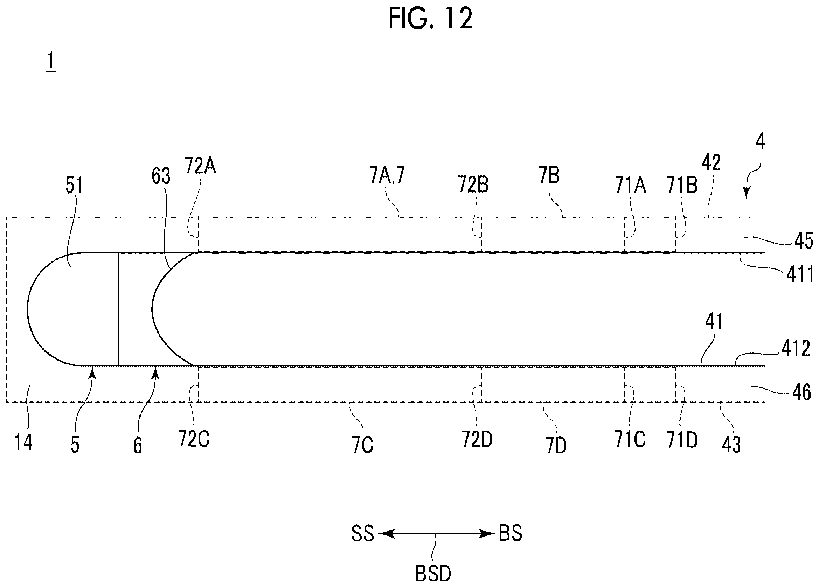

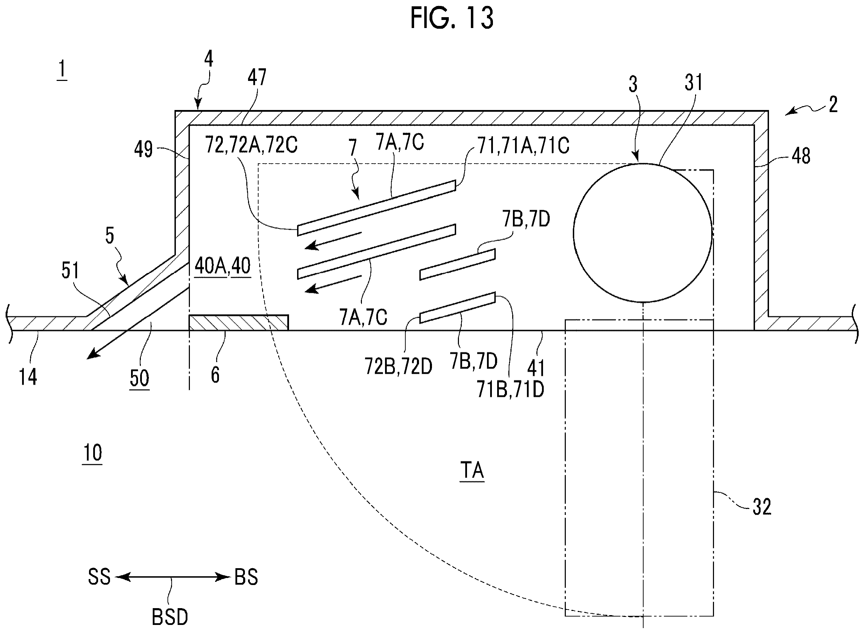

FIG. 12 is a schematic view showing the vicinity of the fin stabilizer 2 of the ship 1 according to the embodiment of the present disclosure when viewed from the outer side of the hull 11. FIGS. 13 to 15 are each schematic sectional views schematically showing the cross section, which is orthogonal to the height direction, of the vicinity of the fin stabilizer 2 of the ship 1 according to the embodiment of the present disclosure. In some embodiments, as shown in FIG. 12, the fin stabilizer 2 includes at least one (in the shown example, a plurality of) rectification plate 7 (7A to 7D) that has one end connected to any one of the ceiling surface 42 or the bottom surface 43 and that extends in the height direction of the hull 11.

As shown in FIGS. 13 to 15, each of the plurality of rectification plates 7 (7A to 7D) is at least partially present in the turning region TA of the fin stabilizer 2 when viewed from above, and is inclined such that an end 72 (72A to 72D) on the stern side of the rectification plate 7 has a smaller distance from the opening 41 than an end 71 (71A to 71D) on the bow side of the rectification plate 7. In addition, each of the plurality of rectification plates 7 (7A to 7D) is not present in the turning region TA of the fin stabilizer 2, and is provided above or below the turning region TA.

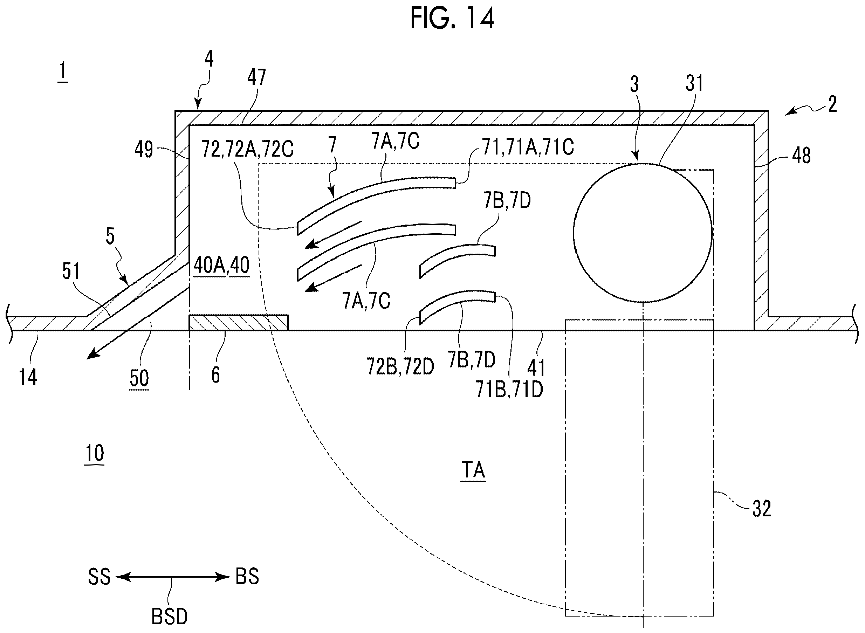

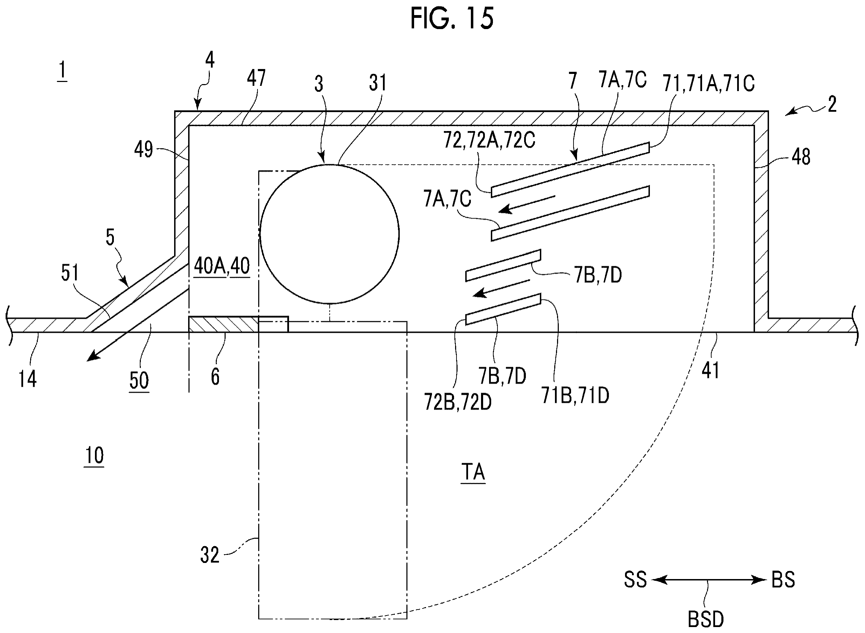

In the embodiments shown in FIGS. 13 and 15, each of the plurality of rectification plates 7 (7A to 7D) is made of a flat plate extending linearly from the end 71 on the bow side to the end 72 on the stern side when viewed from above. In the embodiment shown in FIG. 14, each of the plurality of rectification plates 7 (7A to 7D) is made of a curved plate having a concave curved surface that is recessed toward the inner side (upper side in the drawing) of the internal space 40 of the fin box 4 when viewed from above.

According to the configuration described above, the inflow of the external water into the internal space 40 of the fin box 4 can be prevented from entering the inner side of the internal space 40 by the rectification plate 7. In addition, the flow of the external water flowing into the internal space 40 can be guided to the opening side of the internal space 40 by the rectification plate 7 such that the external water flowing into the internal space 40 is easily discharged from the internal space 40. The rectification plate 7 can exhibit the effects described above even in a case where the blade portion 32 is located at any of the accommodation position or the protrusion position. In addition, the rectification plate 7 can exhibit the effects described above regardless of whether the fins 3 are accommodated forward or rearward in the fin box 4. As shown in FIG. 15, in a case where the rectification plate 7 is disposed on the bow side with respect to the fin 3 at the protrusion position in the forward-accommodated fin stabilizer 2, the external water guided by the rectification plate 7 flows toward the fin 3, and a flow rate of the external water guided to the fin 3 is increased, so that the effect of reducing the roll motion of the fin 3 can be enhanced.

In some embodiments, as shown in FIG. 12, the at least one rectification plate 7 includes at least one (in the shown example, a plurality of) upper-side rectification plate 7A or 7B that has the one end (upper end) connected to the ceiling surface 42, and at least one (in the shown example, a plurality of) lower-side rectification plate 7C or 7D that has the one end (lower end) connected to the bottom surface 43. Each of the plurality of lower-side rectification plates 7C and 7D is disposed at a position overlapping the at least one of the upper-side rectification plate 7A or 7B in a bow-stern direction.

According to the configuration described above, by providing the upper-side rectification plates 7A and 7B and the lower-side rectification plates 7C and 7D at a position at which the upper-side rectification plates 7A and 7B and the lower-side rectification plates 7C and 7D at least partially overlap each other in the bow-stern direction, the flow of the external water flowing into the internal space 40 of the fin box 4 can be more effectively guided to the opening side of the internal space 40 as compared with a case where one of the upper-side rectification plates 7A and 7B or the lower-side rectification plates 7C and 7D is provided.

In some embodiments, as shown in FIGS. 13 to 15, the at least one rectification plate 7 includes at least one (in the shown example, a plurality of) first rectification plate 7B or 7D, and at least one (in the shown example, a plurality of) second rectification plate 7A or 7C that has a greater distance from the opening 41 of the fin box 4 than the first rectification plate 7B or 7D and has a greater length in a bow-stern direction than the first rectification plate 7B or 7D.

According to the configuration described above, the space for installing the rectification plate 7 is smaller on the opening side of the internal space 40 of the fin box 4 than on the inner side, but the first rectification plates 7B and 7D and the second rectification plates 7A and 7C can be installed in the internal space 40 by reducing the length of the first rectification plates 7B and 7D disposed on the opening side of the internal space 40. By providing the first rectification plates 7B and 7D and the second rectification plates 7A and 7C, the flow of the external water flowing into the internal space 40 can be more effectively guided to the opening side of the internal space 40 as compared with a case where one of the first rectification plates 7B and 7D and the second rectification plates 7A and 7C is provided.

### (Guide Plate)

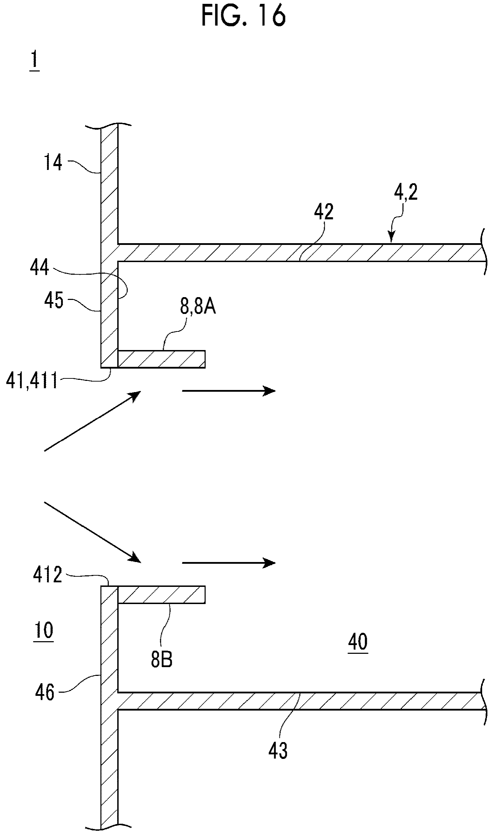

FIG. 16 is a schematic sectional view schematically showing a cross section, which is orthogonal to the bow-stern direction, of the vicinity of the fin stabilizer 2 of the ship 1 according to the embodiment of the present disclosure. In some embodiments, as shown in FIG. 16, the fin stabilizer 2 further includes at least one guide plate 8 that extends toward an inner side of the internal space 40 of the fin box 4 along a direction orthogonal to a height direction of the hull 11 and a bow-stern direction from any one of a lower end portion of the upper-side opening wall 45 and an upper end portion of the lower-side opening wall 46.

According to the configuration described above, the guide plate 8 can prevent the external water that flows from the external space 10 of the hull 11 toward the upper side or the lower side from flowing into the fin box 4. In particular, when the fin 3 is located at the protrusion position and the blade angle of the blade portion 32 is changed, an upward or downward flow is generated in the external water flowing around the fin 3, so that the guide plate 8 operates suitably.

In some embodiments, as shown in FIG. 16, the at least one guide plate 8 includes an upper-side guide plate 8A that has one end connected to the lower end portion of the upper-side opening wall 45, and a lower-side guide plate 8B that has one end connected to the upper end portion of the lower-side opening wall 46 and that is at least partially disposed at a position overlapping the upper-side guide plate 8A in the bow-stern direction.

According to the configuration described above, by providing the upper-side guide plate 8A and the lower-side guide plate 8B at a position at which the upper-side guide plate 8A and the lower-side guide plate 8B partially overlap each other in the bow-stern direction, the external water having the upward or downward flow can be effectively prevented from flowing into the fin box 4 as compared with a case where one of the upper-side guide plate 8A and the lower-side guide plate 8B is provided.

As shown in FIGS. 1 and 2, the ship 1 according to some embodiments includes the fin stabilizer 2, and the ship 1 on which the fin stabilizer 2 is mounted. In this case, the fin stabilizer 2 reduces the resistance caused by the external water in the vicinity of the stern-side wall surface 49, so that the efficiency of the ship 1 including the fin stabilizer 2 can be improved.

In the present specification, the expression representing a relative or absolute disposition such as "in a certain direction", "along a certain direction", "parallel", "orthogonal", "center", "concentric", or "coaxial" not only strictly represents such a disposition, but also represents a state where the disposition is relatively displaced with a tolerance or at an angle or a distance to such an extent that the same function can be obtained.

For example, the expression representing that matters are in an equal state such as "same", "equal", or "homogeneous" not only strictly represents an equal state, but also represents a state where a difference exists with a tolerance or to such an extent that the same function can be obtained.

Further, in the present specification, the expression representing a shape such as a quadrangular shape or a cylindrical shape not only represents a shape such as a quadrangular shape or a cylindrical shape in a geometrically strict sense, but also represents shapes including an uneven portion or a chamfered portion within a range in which the same effect can be obtained.

Further, in the present specification, the expression of "comprise", "include", or "have" one component is not an exclusive expression excluding the presence of other components.

The present disclosure is not limited to the above-described embodiments, and also includes a form in which modifications are added to the above-described embodiments or a form in which the embodiments are combined with each other as appropriate.

The contents described in some embodiments described above are understood, for example, as follows.

1) A fin stabilizer (2) according to at least one embodiment of the present disclosure is a fin stabilizer (2) for suppressing a roll motion of a ship (1), the fin stabilizer (2) including: a fin (3) that is configured to be turnable around a rotation axis (RA); a fin box (4) that forms an internal space (40) in which the fin (3) is accommodated and that has an opening (41) for the fin (3) to enter and exit the internal space (40) and a stern-side wall surface (49) that is a wall surface on a stern side of the fin box (4); a groove portion forming portion (5) that forms a groove portion (51) formed to be recessed with respect to a hull (11) of the ship (1) on the stern side with respect to the fin box (4) and connecting a side-shell plate (14) of the hull (11) and the stern-side wall surface (49); and a closing portion (6) that partitions the internal space (40) of the fin box (4) and an external space (10) of the hull (11) from each other on the stern side with respect to a turning region (TA) of the fin (3).

According to the configuration of 1), the closing portion (6) partitions the internal space (40) of the fin box (4) and the outside of the hull (11) from each other, and thus, while the ship (1) is sailing, the inflow of the external water from the external space (10) of the hull (11) into the internal space (40) or into the inside of the groove portion (51) in which the groove interior space (50) is formed can be suppressed. Accordingly, the effect of suppressing the pressure rise in the external water in the vicinity of the stern-side wall surface (49) and the effect of reducing the resistance due to the provision of the groove portion (51) can be effectively exhibited, and the efficiency of the ship (1) including the fin stabilizer (2) can be improved.

2) In some embodiments, in the fin stabilizer (2) according to 1), an edge (63) on a bow side of the closing portion (6) includes a concave curved portion (631) that is recessed toward the stern side.

According to the configuration of 2), it is preferable that the gap between the edge (63) on the bow side and the turning region (TA) of the fin (3) is small in order to minimize the opening area of the opening (41) of the fin box (4). The edge (63) on the bow side is formed into the concave curved shape corresponding to the convex curved shape such as a front edge or a rear edge of the fin (3), so that the effect of suppressing the inflow of the external water can be effectively exhibited by the closing portion (6).

3) In some embodiments, in the fin stabilizer (2) according to 1), an edge (63) on a bow side of the closing portion (6) includes a height direction extending portion (632) that extends in a height direction of the hull (11), an upwardly curved portion (633) that is curved toward the bow side as going upward from an upper end of the height direction extending portion (632), and a downwardly curved portion (634) that is curved toward the bow side as going downward from a lower end of the height direction extending portion (632).

According to the configuration of 3), by providing the height direction extending portion (632) at the center of the edge (63) on the bow side, the manufacturability of the closing portion (6) can be improved as compared with a case where the edge (63) on the bow side has a concave curved shape.

4) In some embodiments, in the fin stabilizer (2) according to any one of 1) to 3), the groove portion (51) is formed such that each of a maximum depth and an opening height decreases toward the stern side.

According to the configuration of 4), the external water flowing into the groove interior space (50) can be guided to flow toward the groove portion side opening (52) side in the depth direction of the groove portion (51) due to the inner surface shape of the groove portion (51), so that the discharge of the external water from the groove interior space (50) to the external space (10) is facilitated.

5) In some embodiments, in the fin stabilizer (2) according to any one of 1) to 4), a contour shape of the groove portion (51) in a cross section orthogonal to a bow-stern direction is formed in a concave curved shape.

According to the configuration of 5) above, the inner surface of the groove portion (51) is formed in the concave curved shape, so that it is possible to suppress the pressure rise in the external water flowing into the groove interior space (50), and to reduce resistance caused by the external water.

6) In some embodiments, in the fin stabilizer (2) according to any one of 1) to 5), the fin (3) is formed such that a fin tip portion (33) that is an end portion of the fin (3) on a side separated from the rotation axis (RA) when the fin (3) is accommodated in the fin box (4) is located on the stern side with respect to the rotation axis (RA).

Even in a case where the so-called fin (3) is accommodated rearward in the fin box (4) as in the configuration of 6), the effect of suppressing the pressure rise in the external water in the vicinity of the stern-side wall surface (49) and the effect of reducing the resistance can be effectively exhibited by the closing portion (6).

7) In some embodiments, in the fin stabilizer (2) according to any one of 1) to 5), the fin (3) is formed such that a fin tip portion (33) that is an end portion of the fin (3) on a side separated from the rotation axis (RA) when the fin (3) is accommodated in the fin box (4) is located on the bow side with respect to the rotation axis (RA).

Even in a case where the so-called fin (3) is accommodated forward in the fin box (4) as in the configuration of 7), the effect of suppressing the pressure rise in the external water in the vicinity of the stern-side wall surface (49) and the effect of reducing the resistance can be effectively exhibited by the closing portion (6).

8) In some embodiments, in the fin stabilizer (2) according to any one of 1) to 7), the fin box (4) has a ceiling surface (42) that is a wall surface on an upper side of the fin box (4), and a bottom surface (43) that is a wall surface on a lower side of the fin box (4), and the fin stabilizer (2) further includes at least one rectification plate (7) that has one end connected to any one of the ceiling surface (42) or the bottom surface (43), that extends in a height direction of the hull (11), that is at least partially present in the turning region (TA) of the fin stabilizer (2) when viewed from above, and that is inclined such that an end on the stern side of the rectification plate (7) has a smaller distance from the opening (41) of the fin box (4) than an end on the bow side of the rectification plate (7).

According to the configuration of 8), the inflow of the external water into the internal space (40) of the fin box (4) can be prevented from entering the inner side of the internal space (40) by the rectification plate (7). In addition, the flow of the external water flowing into the internal space (40) can be guided to the opening side of the internal space (40) by the rectification plate (7) such that the external water flowing into the internal space (40) is easily discharged from the internal space (40).

9) In some embodiments, in the fin stabilizer (2) according to 8), the at least one rectification plate (7) includes at least one upper-side rectification plate (7A, 7B) that has the one end connected to the ceiling surface, and at least one lower-side rectification plate (7C, 7D) that has the one end connected to the bottom surface and that is disposed at a position overlapping the at least one upper-side rectification plate (7A, 7B) in a bow-stern direction.

According to the configuration of 9), by providing the upper-side rectification plate (7A, 7B) and the lower-side rectification plate (7C, 7D) at a position at which the upper-side rectification plate (7A, 7B) and the lower-side rectification plate (7C, 7D) at least partially overlap each other in the bow-stern direction, the flow of the external water flowing into the internal space (40) of the fin box (4) can be more effectively guided to the opening side of the internal space (40) as compared with a case where one of the upper-side rectification plate (7A, 7B) or the lower-side rectification plate (7C, 7D) is provided.

10) In some embodiments, in the fin stabilizer (2) according to 8) or 9), the at least one rectification plate (7) includes a first rectification plate (7B, 7DC), and a second rectification plate (7A, 7C) that has a greater distance from the opening (41) of the fin box (4) than the first rectification plate (7B, 7D) and has a greater length in a bow-stern direction than the first rectification plate (7B, 7D).

According to the configuration of 10), the space for installing the rectification plate (7) is smaller on the opening side of the internal space (40) of the fin box (4) than on the inner side, but the first rectification plate (7B, 7D) and the second rectification plate (7A, 7C) can be installed in the internal space (40) by reducing the length of the first rectification plate (7B, 7D) disposed on the opening side of the internal space (40). By providing the first rectification plate (7B, 7D) and the second rectification plate (7A, 7C), the flow of the external water flowing into the internal space (40) can be more effectively guided to the opening side of the internal space (40) as compared with a case where one of the first rectification plate (7B, 7D) or the second rectification plate (7A, 7C) is provided.

11) In some embodiments, the fin stabilizer (2) according to any one of 1) to 10), the fin box (4) has an upper-side opening wall (45) that extends upward from an upper edge (411) of the opening (41) of the fin box (4), and a lower-side opening wall (46) that extends downward from a lower edge (412) of the opening (41) of the fin box (4), and the fin stabilizer (2) further includes at least one guide plate (8) that extends toward an inner side of the fin box (4) along a direction orthogonal to a height direction of the hull (11) and a bow-stern direction from any one of a lower end portion of the upper-side opening wall (45) and an upper end portion of the lower-side opening wall (46).

According to the configuration of 11), the guide plate (8) can prevent the external water that flows from the external space (10) of the hull (11) toward the upper side or the lower side from flowing into the fin box (4). In particular, when the fin (3) is located at the protrusion position and the blade angle of the blade portion (32) is changed, an upward or downward flow is generated in the external water flowing around the fin (3), so that the guide plate (8) operates suitably.

12) In some embodiments, in the fin stabilizer (2) according to 11), the at least one guide plate (8) includes an upper-side guide plate (8A) that has one end connected to the lower end portion of the upper-side opening wall, and a lower-side guide plate (8B) that has one end connected to the upper end portion of the lower-side opening wall and that is at least partially disposed at a position overlapping the upper-side guide plate (8A) in the bow-stern direction.

According to the configuration of 12), by providing the upper-side guide plate (8A) and the lower-side guide plate (8B) at a position at which the upper-side guide plate (8A) and the lower-side guide plate (8B) partially overlap each other in the bow-stern direction, the external water having the upward or downward flow can be effectively prevented from flowing into the fin box (4) as compared with a case where one of the upper-side guide plate (8A) and the lower-side guide plate (8B) is provided.

13) A ship (1) according to at least one embodiment of the present disclosure is a ship (1) including: the fin stabilizer (2) according to any one of 1) to 12); and the hull (11) on which the fin stabilizer (2) is mounted.

According to the configuration of 13), the fin stabilizer (2) reduces the resistance caused by the external water in the vicinity of the stern-side wall surface (49), so that the efficiency of the ship (1) including the fin stabilizer (2) can be improved.

14) A method for assembling the fin stabilizer (2) according to at least one embodiment of the present disclosure is a method for assembling the fin stabilizer (2) according to any one of 1) to 12), the method including: a groove portion forming portion preparation step of preparing the groove portion forming portion (5) that is a separate body from the hull (11); a groove portion mounting hole forming step of forming a groove portion mounting hole (141) for mounting the groove portion forming portion (5), on the stern side with respect to the closing portion (6) of the hull (11); a groove portion forming portion fixing step of inserting the groove portion forming portion (5) into the groove portion mounting hole (141) and joining the groove portion forming portion (5) to the hull (11) and the fin box (4) by welding or other methods, to fix the groove portion forming portion (5) to the hull (11) and the fin box (4); and a communication hole forming step of forming a communication hole (491) for allowing a groove interior space (50) formed inside the groove portion (51) to communicate with the internal space (40) of the fin box (4), on the stern-side wall surface (49).

According to the method of 14), the groove portion (51) can be newly provided in the fin stabilizer (2) that does not include the groove portion (51). In addition, when the groove portion (51) is newly provided, the existing side-shell plate (14) of the hull (11) can be used as the closing portion (6), so that the fin stabilizer (2) can be remodeled to include the groove portion (51) and the closing portion (6) without newly providing the closing portion (6).

### Reference Signs List

1: ship
2: fin stabilizer
3: fin
4: fin box
5: groove portion forming portion
6: closing portion
7: rectification plate
8: guide plate
10: external space
11: hull
12: bow
13: stern
14: side-shell plate
14A: starboard-side shell plate
14B: port-side shell plate
15: bottom plate
16: upper deck
31: accommodation drive portion
32: blade portion
33: fin tip portion
40: internal space
40A: stern-side space
41: opening
42: ceiling surface
43: bottom surface
44: opening-side wall surface
45: upper-side opening wall
46: lower-side opening wall
47: inner-side wall surface
48: bow-side wall surface
49: stern-side wall surface
50: groove interior space
51: groove portion
52: groove portion side opening
61: upper end
62: lower end
63: edge on bow side
64: edge on stern side
65: outer surface
631: concave curved portion
632: height direction extending portion
633: upwardly curved portion
634: downwardly curved portion
BL: boundary line
BS: bow side
BSD: bow-stern direction
RA: rotation axis
SS: stern side
TA: turning region
WL: waterline

## Claims

1. A fin stabilizer for suppressing a roll motion of a ship, the fin stabilizer comprising:
a fin that is configured to be turnable around a rotation axis;
a fin box that forms an internal space in which the fin is accommodated and that has an opening for the fin to enter and exit the internal space and a stern-side wall surface that is a wall surface on a stern side of the fin box;
a groove portion forming portion that forms a groove portion formed to be recessed with respect to a hull of the ship on the stern side with respect to the fin box and connecting a side-shell plate of the hull and the stern-side wall surface; and
a closing portion that partitions the internal space of the fin box and an external space of the hull from each other on the stern side with respect to a turning region of the fin.

2. The fin stabilizer according to Claim 1,
wherein an edge on a bow side of the closing portion includes a concave curved portion that is recessed toward the stern side.

3. The fin stabilizer according to Claim 1,
wherein an edge on a bow side of the closing portion includes
a height direction extending portion that extends in a height direction of the hull,
an upwardly curved portion that is curved toward the bow side as going upward from an upper end of the height direction extending portion, and
a downwardly curved portion that is curved toward the bow side as going downward from a lower end of the height direction extending portion.

4. The fin stabilizer according to any one of Claims 1 to 3,
wherein the groove portion is formed such that each of a maximum depth and an opening height decreases toward the stern side.

5. The fin stabilizer according to any one of Claims 1 to 3,
wherein a contour shape of the groove portion in a cross section orthogonal to a bow-stern direction is formed in a concave curved shape.

6. The fin stabilizer according to any one of Claims 1 to 3,
wherein the fin is formed such that a fin tip portion that is an end portion of the fin on a side separated from the rotation axis when the fin is accommodated in the fin box is located on the stern side with respect to the rotation axis.

7. The fin stabilizer according to any one of Claims 1 to 3,
wherein the fin is formed such that a fin tip portion that is an end portion of the fin on a side separated from the rotation axis when the fin is accommodated in the fin box is located on a bow side with respect to the rotation axis.

8. The fin stabilizer according to any one of Claims 1 to 3,
wherein the fin box has
a ceiling surface that is a wall surface on an upper side of the fin box, and
a bottom surface that is a wall surface on a lower side of the fin box, and
the fin stabilizer further comprises
at least one rectification plate that has one end connected to any one of the ceiling surface or the bottom surface, that extends in a height direction of the hull, that is at least partially present in the turning region of the fin stabilizer when viewed from above, and that is inclined such that an end on the stern side of the rectification plate has a smaller distance from the opening of the fin box than an end on the bow side of the rectification plate.

9. The fin stabilizer according to Claim 8,
wherein the at least one rectification plate includes
at least one upper-side rectification plate that has the one end connected to the ceiling surface, and
at least one lower-side rectification plate that has the one end connected to the bottom surface and that is disposed at a position overlapping the at least one upper-side rectification plate in a bow-stern direction.

10. The fin stabilizer according to Claim 8,
wherein the at least one rectification plate includes
a first rectification plate, and
a second rectification plate that has a greater distance from the opening of the fin box than the first rectification plate and has a greater length in a bow-stern direction than the first rectification plate.

11. The fin stabilizer according to any one of Claims 1 to 3,
wherein the fin box has
an upper-side opening wall that extends upward from an upper edge of the opening of the fin box, and
a lower-side opening wall that extends downward from a lower edge of the opening of the fin box, and
the fin stabilizer further comprises
at least one guide plate that extends toward an inner side of the fin box along a direction orthogonal to a height direction of the hull and a bow-stern direction from any one of a lower end portion of the upper-side opening wall and an upper end portion of the lower-side opening wall.

12. The fin stabilizer according to Claim 11,
wherein the at least one guide plate includes
an upper-side guide plate that has one end connected to the lower end portion of the upper-side opening wall, and
a lower-side guide plate that has one end connected to the upper end portion of the lower-side opening wall and that is at least partially disposed at a position overlapping the upper-side guide plate in the bow-stern direction.

13. A ship comprising:
the fin stabilizer according to any one of Claims 1 to 3; and
the hull on which the fin stabilizer is mounted.

14. A method for assembling the fin stabilizer according to any one of Claims 1 to 3, the method comprising:
a groove portion forming portion preparation step of preparing the groove portion forming portion that is a separate body from the hull;
a groove portion mounting hole forming step of forming a groove portion mounting hole for mounting the groove portion forming portion, on the stern side with respect to the closing portion of the hull;
a groove portion forming portion fixing step of inserting the groove portion forming portion into the groove portion mounting hole and joining the groove portion forming portion to the hull and the fin box by welding or other methods, to fix the groove portion forming portion to the hull and the fin box; and
a communication hole forming step of forming a communication hole for allowing a groove interior space formed inside the groove portion to communicate with the internal space of the fin box, on the stern-side wall surface.
